# FASCICULE DE BREVET EUROPEEN

(11) **EP 1 209 441 B1**
(45) Date de publication et mention de la délivrance du brevet: **26.12.2007**
(21) Numéro de dépôt: 01403013.4
(22) Date de dépôt: 23.11.2001
(51) Int. Cl.: G01B 11/00, G01C 11/00, G01S 17/42, G02B 26/12

(54) **Dispositif de relèvement tridimensionnel d'une scène à émission laser**
Messinstrument für 3D-Form mit Laserscanner
Three-dimensional shape-measuring instrument with laser scanner

(30) Priorité: 24.11.2000 FR 0015232
(43) Date de publication de la demande: 29.05.2002
(73) Titulaire: Mensi, 94120 Fontenay sous bois (FR)
(72) Inventeur: d'Aligny, Auguste, 75005 Paris (FR); Guittard, Olivier, 78640 Neauphle le Chateau (FR); Huard, François, 75013 Paris (FR); Paramythioti, Michel, 41130 Gievres (FR)
(74) Mandataire: Habasque, Etienne J. Jean-François

(56) Documents cités:
- EP-A- 0 599 542
- US-A- 4 707 610
- US-A- 4 710 621
- US-A- 5 237 331
- US-A- 5 988 862
- US-A- 6 115 114

## Description

La présente invention concerne un dispositif de relèvement tridimensionnel d'une scène.

Plus particulièrement, la présente invention concerne un dispositif de relèvement tridimensionnel, comprenant un émetteur laser, des moyens de balayage selon des premier et second axes de rotation pour balayer la scène à l'aide d'un faisceau laser émis par l'émetteur laser, un récepteur photosensible d'une image d'un spot créé par le faisceau laser sur la scène, des moyens de focalisation du faisceau laser rétrodiffusé par la scène vers le récepteur photosensible, des premiers moyens de mesure de l'orientation du faisceau à la sortie des moyens de balayage, et des seconds moyens de mesure de la distance entre le dispositif et le spot par télémétrie laser, comprenant une lame séparatrice des faisceaux émis et rétrodiffusé par la scène.

Un tel dispositif est décrit dans le document US 5 988 862 A. Il comporte un émetteur d'impulsions laser, des moyens de balayage comportant deux miroirs galvanométriques libres en rotation autour de deux axes respectifs orthogonaux, et des codeurs pour diriger le faisceau laser et déterminer l'orientation de celui-ci, en fonction des positions des deux miroirs galvanométriques. De plus, il comporte un séparateur optique du faisceau émis par l'émetteur d'impulsions et du faisceau rétrodiffusé par la scène, ce qui permet d'effectuer une mesure de la distance entre le dispositif et le spot créé par le faisceau laser sur la scène, par mesure du " temps de vol " de l'impulsion laser. Pour ce faire, le dispositif comporte également des moyens de mesure de l'instant d'émission du faisceau laser et des moyens de mesure de l'instant de réception par un récepteur photosensible du faisceau rétrodiffusé par la scène.

Ainsi, une impulsion émise par l'émetteur laser est partiellement réfléchie par le séparateur vers les deux miroirs galvanométriques pour créer un spot sur la scène. Une partie de l'impulsion reçue par la scène est ensuite rétrodiffusée vers les deux miroirs galvanométriques, puis traverse le séparateur pour être reçue par un télescope focalisant son énergie sur le récepteur photosensible.

Lorsque le dispositif s'applique à des mesures s'étendant sur une gamme importante de distances, telles que classiquement de 1 à 100 mètres, l'énergie du faisceau rétrodiffusé étant inversément proportionnelle au carré de la distance séparant le spot du dispositif, la mesure effectuée par le récepteur photosensible peut souffrir d'une grande dynamique de l'énergie des faisceaux reçus par celui-ci.

L'invention vise à remédier à cet inconvénient en créant un dispositif capable de limiter puis de prendre en compte la dynamique de l'énergie des faisceaux rétrodiffusés reçus par le récepteur photosensible.

L'invention a donc pour objet un dispositif de relèvement tridimensionnel d'une scène selon la revendication 1.

Ainsi, le dispositif selon l'invention permet de compenser la dynamique de l'énergie du faisceau rétrodiffusé reçue par le récepteur photosensible, en fournissant des moyens de focalisation possédant une grande focale et un faible encombrement.

En effet, l'augmentation de la focale des moyens de focalisation permet d'augmenter la taille de l'image du spot créée sur le récepteur photosensible, de sorte que celle-ci le couvre totalement, même lorsque le spot est très éloigné du dispositif. Lorsque le spot se rapproche, la taille de son image au niveau du récepteur photosensible augmente de façon inversement proportionnelle au carré de la distance séparant le spot du dispositif, comme l'énergie du faisceau.

De cette façon, l'effet de dynamique dû à la gamme importante des distances mesurées est compensé par l'augmentation de la taille de l'image du spot lorsque celui-ci se rapproche, de telle sorte que la densité surfacique d'énergie reçue par le récepteur photosensible reste constante, sans pour autant nuire à l'encombrement du dispositif.

Le dispositif de relèvement tridimensionnel selon l'invention peut en outre comporter une ou plusieurs des caractéristiques suivantes :
- le système optique convergent comprend un miroir sphérique de compensation de déformations de la surface d'onde du faisceau provoquées par la lame séparatrice, ce miroir optique étant disposé hors d'axe par rapport aux faisceaux laser émis et rétrodiffusé ;
- les seconds moyens de mesure comprennent en outre, disposée entre l'émetteur laser et la lame séparatrice, une lame prismatique de compensation des déformations de la surface d'onde du faisceau émis provoquées par le miroir sphérique hors d'axe ;
- les seconds moyens de mesure comprenant en outre des moyens de mesure de l'instant d'émission du faisceau laser et des moyens de mesure de l'instant de réception par le récepteur photosensible du faisceau rétrodiffusé par la scène, les moyens de mesure de l'instant d'émission du faisceau laser comportent une fibre optique recevant une partie du faisceau laser réfléchie hors d'axe par la lame prismatique et la transmettant à un récepteur photosensible ;
- le système optique divergent comprend une lentille divergente disposée sur le trajet du faisceau rétrodiffusé, entre la lame séparatrice et le récepteur photosensible ;
- la lame séparatrice comporte une pastille semi-réfléchissante de réduction de la dynamique de l'énergie du faisceau rétrodiffusé par la scène et reçu par le récepteur photosensible ;
- le récepteur photosensible comprend une photodiode à avalanche associée à des moyens de compensation en température ;
- les moyens de compensation en température comportent une sonde de température et sont des moyens de réglage de la tension de polarisation du récepteur photosensible, en fonction de la température mesurée par cette sonde ;
- les moyens de balayage comprennent un miroir plan et des moyens d'asservissement de la position de ce miroir autour desdits premier et second axes de rotation desdits moyens de balayage ;
- le dispositif comprenant une partie opto-mécanique et une partie électronique, le premier axe de rotation est un axe de rotation en gisement, et les moyens d'asservissement autour de cet axe, comportent une plate-forme entraînée en rotation autour de cet axe par un moteur pas à pas et percée d'une ouverture axiale pour le passage de moyens de connexion électrique entre des éléments de la partie opto-mécanique et des éléments de la partie électronique ;
- la plate-forme est disposée sur une couronne fixe par l'intermédiaire de moyens de roulement à billes sur jonc, disposés entre la plate-forme et la couronne fixe ;
- le moteur pas à pas est disposé sous la couronne fixe en périphérie de celle-ci et est associé à un pignon d'entraînement de la plate-forme en rotation autour du premier axe, par l'intermédiaire d'une courroie crantée portée par la plate-forme ;
- le second axe de rotation est un axe de rotation en site, et les moyens d'asservissement autour de cet axe comportent un bras de transmission, dont l'axe est fixé par rapport à la plate-forme, reliant le miroir à un scanner galvanométrique d'entraînement en rotation du miroir autour dudit second axe ;
- les premiers moyens de mesure comportent un codeur optique incrémental annulaire de mesure de l'orientation du faisceau en gisement, porté par la plate-forme ;
- le codeur optique est solidaire de la couronne fixe et est pourvu d'une partie mobile solidaire de la plate-forme ;
- il comporte en outre un ensemble de focalisation automatique du faisceau laser émis par l'émetteur laser et des moyens de fixation de l'émetteur laser sur l'ensemble ;
- lesdits moyens de fixation comportent une embase portant l'émetteur laser et fixée sur l'ensemble de focalisation automatique au moyen de vis engagées dans des trous axiaux de plus grand diamètre ménagés dans l'embase, et des vis de réglage radial de l'émetteur laser sur l'ensemble de focalisation automatique ;
- l'ensemble de focalisation automatique du faisceau laser comporte au moins une lentille divergente disposée sur l'axe d'émission du faisceau laser, une lentille convergente disposée également sur l'axe d'émission et des moyens de déplacement relatif de la lentille convergente et de la lentille divergente le long de l'axe d'émission ;
- lesdits moyens de déplacement relatif comportent un manchon supportant la lentille convergente autour duquel est fixée une membrane souple et des moyens d'actionnement de la membrane en vue du déplacement dudit manchon le long de l'axe ;
- les moyens d'actionnement de la membrane souple comprennent un générateur de courant et une bobine, alimentée en courant par le générateur de courant, fixée sur la membrane souple et disposée dans l'entrefer d'un noyau magnétique, autour de l'axe d'émission ;
- les moyens d'actionnement de la membrane souple comportent des moyens de comparaison entre la position détectée de la lentille convergente et la position souhaitée de la lentille convergente le long de l'axe comportant des moyens d'activation du générateur de courant en fonction de cette différence ;
- l'ensemble de focalisation automatique comporte des moyens optiques de détection de la position de la lentille convergente sur l'axe d'émission;
- il comporte des moyens de réglage des moyens d'asservissement en position du miroir galvanométrique autour de l'axe de rotation en site et des moyens de réglage de l'axe de réception du faisceau laser autour de l'axe de rotation en gisement ;
- les moyens de réglage des moyens d'asservissement en position du miroir galvanométrique et les moyens de réglage de l'axe de réception du faisceau, comprennent chacun un berceau formé d'une portion de couronne et chacun un support de berceau correspondant dans lequel le berceau glisse en rotation autour de l'axe de ladite couronne ;
- l'axe de rotation du berceau des moyens de réglage des moyens d'asservissement en position du miroir galvanométrique est perpendiculaire à l'axe de rotation en site et à l'axe de rotation en gisement, et l'axe de rotation du berceau des moyens de réglage de l'axe de réception est perpendiculaire à l'axe de rotation en site et dans un plan vertical contenant l'axe de rotation en gisement, lesdits axes de rotation des berceaux étant sécants au centre du miroir;
- il comprend en outre des moyens de réduction de la dynamique du signal fourni en sortie du récepteur photosensible ;
- les moyens de réduction de la dynamique du signal comportent un atténuateur de tension à gain programmable et un ensemble d'amplification à gain fixe en sortie de cet atténuateur ; et
- les seconds moyens de mesure de la distance entre le dispositif et le spot comportent un circuit intégré de mesure du "temps de vol" du faisceau laser.

L'invention a également pour objet un procédé de désignation d'une zone d'intérêt sur une scène, mis en oeuvre dans un dispositif de relèvement tridimensionnel du type précité, comportant les étapes suivantes :
- le relevé tridimensionnel d'un ensemble de points de la scène ;
- le stockage des coordonnées de l'ensemble de points relevés ;
- la modélisation et/ou la visualisation dudit ensemble de points,
   caractérisé en ce qu'il comporte en outre les étapes suivantes :

- la sélection d'un sous-ensemble d'au moins un point dudit ensemble, définissant ladite zone d'intérêt ; et
- le pilotage des moyens de balayage et de l'émetteur pour que le spot créé sur la scène par le faisceau laser désigne successivement au moins une partie des points du sous-ensemble sélectionné correspondant à ladite zone d'intérêt.

L'invention sera mieux comprise à l'aide de la description qui va suivre, donnée uniquement à titre d'exemple et faite en se référant aux dessins annexés sur lesquels :
- la Fig.1 est une vue schématique de la structure générale d'un dispositif selon l'invention ;
- la Fig.2 représente schématiquement la projection, selon la direction de déplacement d'un faisceau laser, de la surface d'onde de celui-ci, au cours de son trajet aller dans le dispositif de la figure 1 ;
- la Fig.3 représente schématiquement la projection, selon la direction de déplacement d'un faisceau laser, de la surface d'onde de celui-ci, au cours de son trajet retour dans le dispositif de la figure 1 ;
- la Fig.4 est une vue schématique d'un ensemble de focalisation automatique, pour le dispositif de la figure 1 ;
- la Fig.5 est une vue schématique partielle de moyens de balayage du dispositif de la figure 1 ;
- la Fig.6 est une vue schématique de côté de premiers moyens de réglage des moyens de balayage de la figure 3 ;
- la Fig.7 est une vue schématique de dessus de seconds moyens de réglage des moyens de balayage, selon la direction I de la figure 3 ;
- la Fig.8 représente un schéma synoptique de moyens électroniques de réduction de la dynamique d'un signal, pour le dispositif de la figure 1 ; et
- la Fig.9 représente un schéma synoptique de moyens d'asservissement en température d'un récepteur photosensible, pour le dispositif de la figure 1.

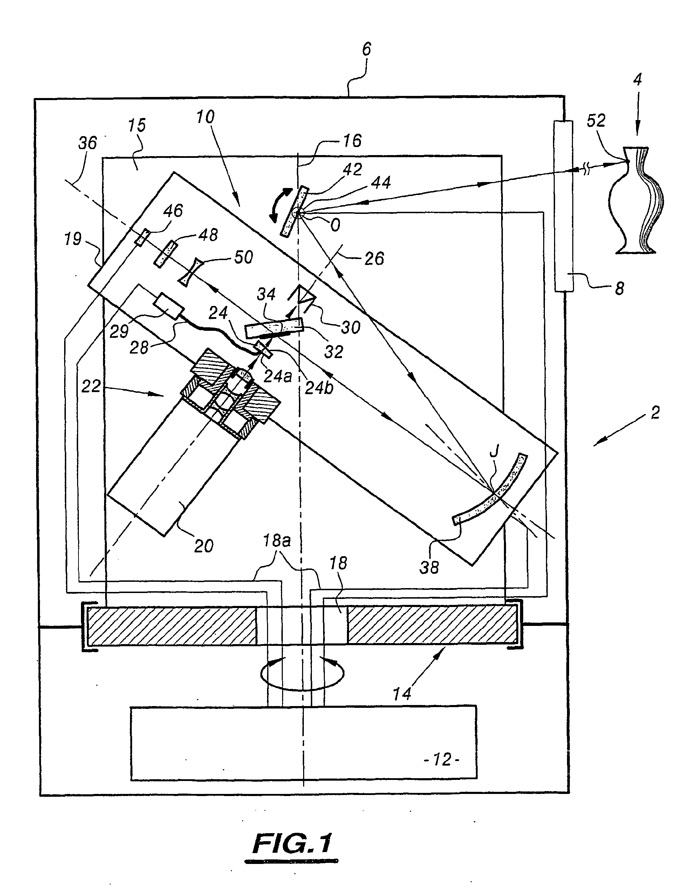

Comme représenté à la figure 1, un dispositif 2 de relèvement tridimensionnel d'une scène 4 matérialisée par une poterie par exemple, comporte un boîtier 6 dans lequel est aménagé un hublot 8 transparent aux faisceaux lumineux.

Ce boîtier 6 comporte deux parties.

Une première partie, dans laquelle se trouve le hublot 8, comporte des systèmes optiques et constitue la partie opto-mécanique 10 du dispositif 2.

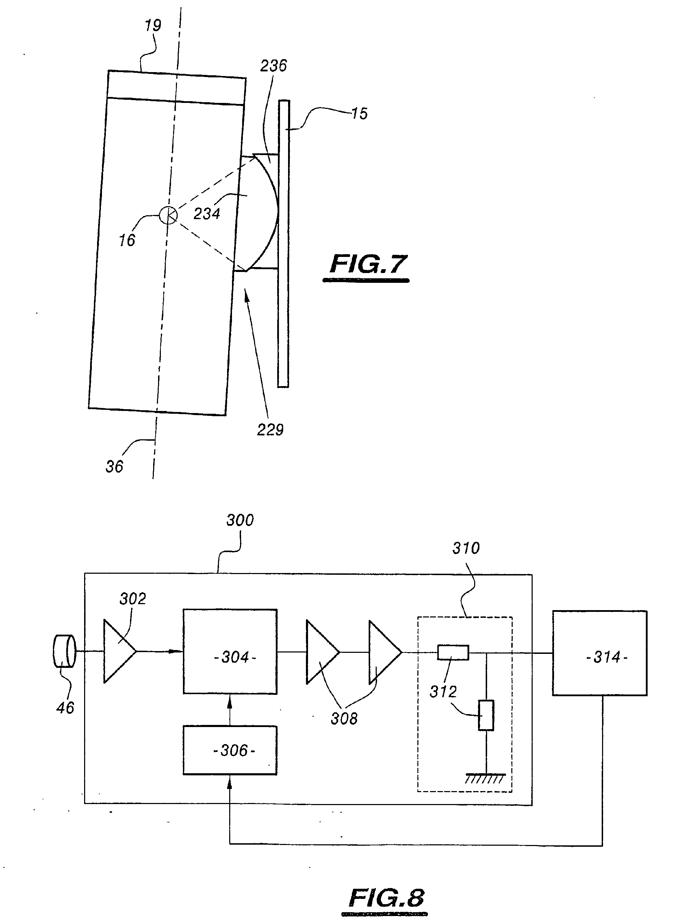

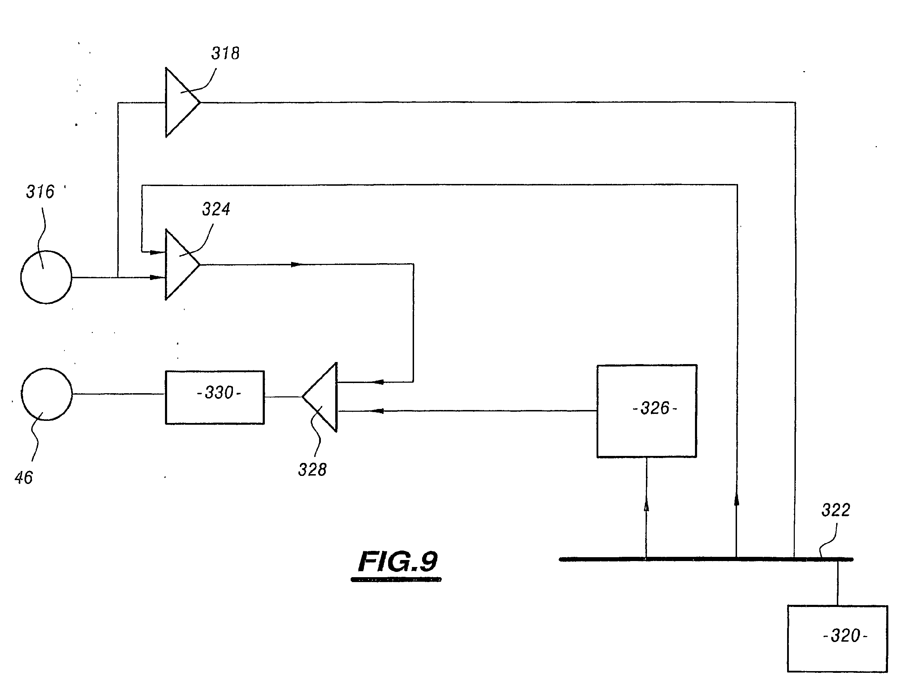

Une seconde partie, située en-dessous de la première partie, comporte des systèmes électroniques dont les éléments essentiels seront décrits en référence aux figures 8 et 9 et constitue la partie électronique 12 du dispositif 2.

Cette partie électronique comporte des capacités de calcul et de stockage de données suffisantes pour y mettre en oeuvre des procédés de relèvement, de représentation, de modification ou d'activation de la partie opto-mécanique 10, classiques.

Notamment, la partie électronique 12 comporte une architecture de micro-ordinateur embarqué comprenant un fond de panier susceptible d'accueillir des cartes électroniques supportant différents formats de bus de transmission de données, tels que des bus PCI, ISA.

Elle comporte également une carte de micro-ordinateur compacte munie d'un disque dur statique, et des cartes de pilotage de différents éléments de la partie opto-mécanique 10 et de la partie électronique 12, qui seront décrits par la suite.

De plus, la partie électronique 12 est connectée à un organe de commande extérieure (non représenté), tel qu'un ordinateur portable ou un organiseur personnel électronique, au moyen d'une liaison de type éthernet.

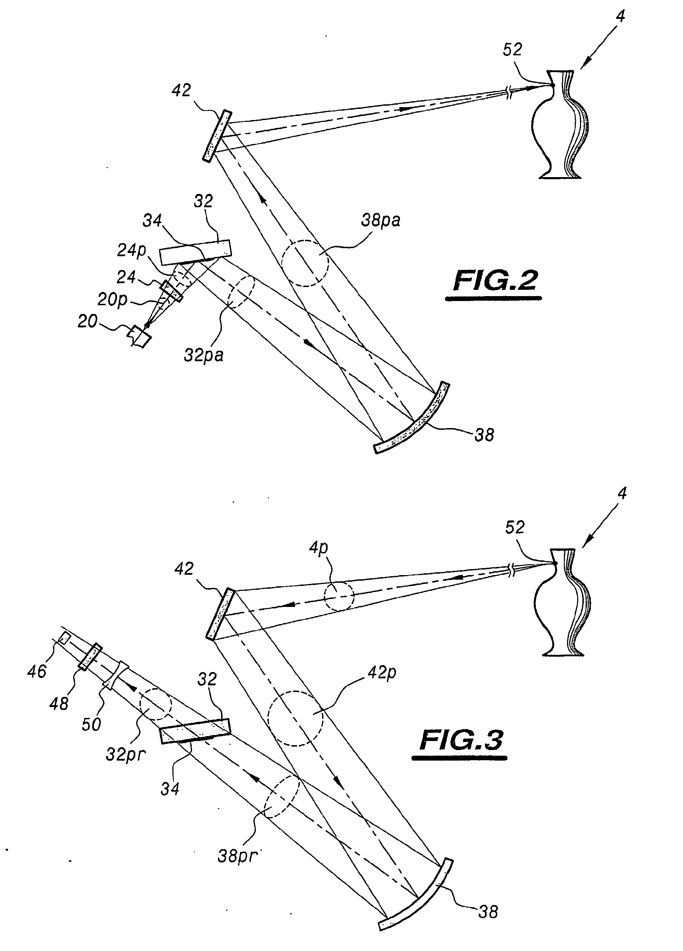

Entre ces deux parties, est disposée une plate-forme 14 circulaire et horizontale formant support des systèmes optiques du dispositif 2 par l'intermédiaire de plaques telles que la plaque 15. Cette plate-forme 14 est asservie en position angulaire autour d'un axe vertical 16 la coupant en son centre par un dispositif d'asservissement qui sera décrit en référence à la figure 3, permettant ainsi un balayage en gisement de la scène 4 par le dispositif 2.

De plus, elle est percée d'une ouverture axiale 18 centrée sur l'axe 16, permettant le passage de moyens de connexion électriques 18a entre des éléments de la partie opto-mécanique 10 et des éléments de la partie électronique 12. Un mode de réalisation détaillé de cette plate-forme 14 sera décrit en référence à la figure 3.

La partie opto-mécanique 10 comporte :
- une monture en forme de poutre 19 fixée sur la plate-forme 14 par des plaques telles que la plaque 15 et destinée à soutenir une partie des éléments de la partie opto-mécanique 10 ;
- un émetteur laser 20 de type classique, tel qu'un microlaser, fixé sur cette monture 19 ;
- un ensemble 22 de focalisation automatique d'un faisceau laser émis par l'émetteur laser 20, fixé sur celui-ci ;
- une lame prismatique 24 disposée sur l'axe 26 d'émission d'un faisceau laser par l'émetteur 20, en sortie de l'ensemble 22 de focalisation automatique, et fixée sur la monture 19 ;
- une fibre optique 28 de réception d'une partie du faisceau laser réfléchie hors d'axe par la lame prismatique 24 ;
- un récepteur photosensible 29 de type classique raccordé à la fibre optique 28 ;
- un piège à lumière 30 de type classique fixé sur la monture 19 à une distance prédéterminée de la lame prismatique 24, pour empêcher la réflexion d'une partie du faisceau laser ayant traversé la lame prismatique 24 et reçue par ce piège ;
- une lame séparatrice transparente 32 fixée sur la monture 19 et disposée entre la lame prismatique 24 et le piège à lumière 30, sur l'axe d'émission 26 et inclinée d'environ 45° sur ledit axe ;
- une pastille semi-réfléchissante 34 disposée sur la surface de la lame séparatrice 32 en regard de la lame prismatique 24 et centrée sur l'axe d'émission 26, ladite pastille réfléchissant une partie du faisceau émis par l'émetteur 20 ayant traversé la lame prismatique 24 et transmettant en retour, une partie du faisceau rétrodiffusé par la scène 4, le long d'un axe optique 36 parallèle à l'axe longitudinal de la monture 19 ;
- un miroir sphérique 38 fixé sur la monture 19, disposé hors d'axe par rapport à l'axe optique 36 et réfléchissant un faisceau laser émis par l'émetteur 20 en provenance de la lame séparatrice 32 ou rétrodiffusé par la scène 4 ; le miroir sphérique 38 fait partie d'un système optique convergent.
- un miroir galvanométrique 42 asservi en position angulaire autour d'un axe 44 perpendiculaire à l'axe 16 coupant ce dernier en un point 0 et dont la position sera précisée par la suite. L'axe 44 est fixe par rapport à la plate-forme 14, pour diriger un faisceau laser réfléchi par le miroir sphérique 38 vers la scène 4 et réciproquement pour diriger un faisceau laser rétrodiffusé par la scène 4 vers le miroir sphérique 38 ;
- un récepteur photosensible 46 disposé sur l'axe optique 36, sur le trajet de retour du faisceau laser rétrodiffusé par la scène 4 et transmis par la lame séparatrice 32 ;
- un filtre interférentiel 48 de type classique, disposé sur l'axe optique 36, entre la lame séparatrice 32 et le récepteur photosensible 46, pour filtrer le faisceau rétrodiffusé par la scène 4 avant qu'il n'atteigne le récepteur photosensible 46 ; et
- une lentille divergente 50, disposée sur l'axe optique 36, entre la lame séparatrice 32 et le récepteur photosensible 46, pour former, en association avec le miroir sphérique 38, un téléobjectif afin de réduire la longueur de la voie de réception du faisceau laser rétrodiffusé tout en conservant une distance focale élevée. La lentille divergente 50 fait partie d'un système optique divergent fixe par rapport au système optique convergent et par rapport au récepteur photosensible 46 et au filtre 48. Le système optique convergent est également fixe par rapport au récepteur photosensible 46 et au filtre 48. La lentille divergente 50 et le miroir sphérique 38 sont par conséquent fixes par rapport au récepteur photosensible 46 et au filtre 48.

L'émetteur laser 20, le système 22 de mise au point automatique, la lame prismatique 24 et l'ensemble constitué par la lame séparatrice 32 et la pastille semi-réfléchissante 34, sont disposés de manière que les axes 16, 26 et 36 soient rigoureusement coplanaires.

Ainsi, un faisceau laser émis par l'émetteur laser 20 sur l'axe 26 atteint la lame prismatique 24 après avoir traversé l'ensemble 22 de focalisation automatique. Il pénètre dans la lame prismatique 24 à travers une première surface plane 24a de séparation, perpendiculaire à l'axe 26.

Puis il sort de la lame prismatique 24, en traversant une seconde surface plane 24b, inclinée par rapport à l'axe 26. Une partie du faisceau laser est alors réfléchie par la surface 24b, en dehors de l'axe 26.

Cette partie réfléchie du faisceau laser atteint de nouveau la première surface plane 24a en un point de contact entre cette première surface plane 24a de la lame prismatique 24 et une première extrémité de la fibre optique 28.

L'autre extrémité de la fibre optique 28 est connectée à un récepteur photosensible 29, déterminant un instant T₁ de réception de la partie du faisceau laser réfléchie par la lame prismatique 24. Cet instant T₁ est considéré par la suite comme l'instant d'émission du faisceau laser.

Après avoir traversé la lame prismatique 24, le faisceau laser atteint la pastille semi-réfléchissante 34 au centre de celle-ci.

Une partie du faisceau laser est alors réfléchie le long de l'axe optique 36 en direction du miroir sphérique 38, tandis que l'autre partie du faisceau laser est totalement absorbée par le piège à lumière 30 après avoir traversé la lame séparatrice 32.

Le faisceau laser réfléchi par la lame séparatrice 32 atteint ensuite le miroir sphérique 38 en un point J prédéterminé par le positionnement hors d'axe du miroir sphérique sur la monture 19.

Le miroir sphérique 38 est positionné par rapport à la monture 19 et à la plate-forme 14, de manière que le faisceau laser, après s'être réfléchi sur le miroir sphérique au point J, suive un trajet compris dans le plan contenant les axes 16, 26 et 36, et rencontre le miroir galvanométrique 42 au point 0 d'intersection des axes 16 et 44, l'axe 44 étant de plus orthogonal au plan dans lequel se déplace le faisceau laser. De préférence, le point 0 est situé au centre de la surface réfléchissante du miroir galvanométrique 42.

Le faisceau laser est ensuite réfléchi par le miroir galvanométrique 42, puis crée un spot lumineux 52 sur la scène 4, après avoir traversé le hublot 8.

Ensuite, par rétrodiffusion du faisceau laser sur la scène 4, une partie de celui-ci suit sensiblement le même trajet que celui décrit précédemment, en sens inverse, jusqu'à l'ensemble constitué par la lame séparatrice 32 et la pastille semi-réfléchissante 34, et traverse cet ensemble le long de l'axe 36, en direction du récepteur photosensible 46.

Avant d'atteindre le récepteur photosensible 46, le faisceau laser, ayant traversé la lame séparatrice 32, traverse la lentille divergente 50 puis le filtre interférentiel 48.

Le récepteur photosensible 46 détermine ensuite l'instant T₂ de réception du faisceau laser rétrodiffusé par la scène. Le calcul de la distance séparant le spot 52 du point 0 en fonction des instants T₁ et T₂ est considéré comme connu en soi.

La pastille semi-réfléchissante 34 a pour fonction de diriger une partie du faisceau laser émis vers le miroir sphérique 38 le long de l'axe optique 36. Mais elle a aussi pour fonction de modifier la dynamique de l'énergie d'une partie du faisceau laser rétrodiffusé par la scène 4 et reçu par le récepteur photosensible 46.

En effet, lorsque le spot 52 est proche du dispositif 2, l'énergie du faisceau laser rétrodiffusé par la scène 4 est importante, mais le diamètre de ce faisceau laser traversant la lame séparatrice 32 est inférieur à celui de la pastille semi-réfléchissante 34.

Or, dans les dispositifs classiques, la lame séparatrice 32 est en général pourvue d'une obturation centrale totalement réfléchissante, ce qui a pour effet d'empêcher la mesure de la distance du spot 52 dans ce cas.

Au contraire, lorsque la lame séparatrice est pourvue d'une pastille telle que la pastille semi-réfléchissante 34, la partie du faisceau qui traverse la lame séparatrice 32 passe entièrement par la pastille semi-réfléchissante 34 et une partie atténuée de ce faisceau parvient au récepteur photosensible 46.

Par contre, lorsque le spot est éloigné du dispositif 2, l'énergie du faisceau laser rétrodiffusé par la scène 4 est faible, puisqu'elle varie en fonction inverse du carré de la distance, mais le diamètre de ce faisceau laser et traversant la lame séparatrice 32 est plus important et au-delà d'une distance prédéterminée, il devient plus grand que celui de la pastille semi-réfléchissante 34.

Dans ce cas, une partie de l'énergie du faisceau est entièrement transmise par la lame séparatrice 32 au récepteur photosensible 46, en périphérie de la pastille semi-réfléchissante 34. Cette partie entièrement transmise est d'autant plus importante que le spot est plus éloigné du dispositif et donc que l'énergie du faisceau laser rétrodiffusé est faible.

Selon un mode de réalisation particulier, l'émetteur laser 20 est micro-laser de puissance de crête égale à 278 W. Le miroir sphérique 38 possède un diamètre tel que le diamètre optique de réception du dispositif est de 40 mm. La pastille semi-réfléchissante 34 a un diamètre de 6 mm et un pouvoir réflecteur de 0,5. Enfin, l'Albedo de la surface de réception du récepteur photosensible 46, qui représente son coefficient de rétrodiffusion, est de 0,01.

Dans ce cas particulier, on obtient le tableau de résultats suivant :

| **Distance (m)** | **Puissance rétrodiffusée sur le dispositif 2 (µW)** | **Puissance reçue par le récepteur photosensible 6 (µW)** | | |
|---|---|---|---|---|
| | | **Périphérie** | **Pastille** | **Total** |
| 1 | 712,7 | 0 | 0,16 | 0,16 |
| 1,5 | 316,7 | 0 | 0,15 | 0,15 |
| 2 | 178,2 | 0 | 0,14 | 0,14 |
| 3 | 79,2 | 0 | 0,13 | 0,13 |
| 5 | 28,5 | 0 | 0,13 | 0,13 |
| 7 | 14,5 | 0 | 0,13 | 0,13 |
| 10 | 7,1 | 0 | 0,13 | 0,13 |
| 15 | 3,17 | 0 | 0,13 | 0,13 |
| 20 | 1,78 | 0 | 0,13 | 0,13 |
| 30 | 0,79 | 0,11 | 0,07 | 0,18 |
| 40 | 0,45 | 0,17 | 0,04 | 0,21 |
| 50 | 0,29 | 0,2 | 0,03 | 0,23 |
| 60 | 0,2 | 0,16 | 0,02 | 0,18 |
| 70 | 0,15 | 0,12 | 0,01 | 0,13 |
| 80 | 0,111 | 0,09 | 0,01 | 0,1 |
| 90 | 0,088 | 0,07 | 0,01 | 0,08 |

Dans ce tableau, la première colonne représente la distance séparant le spot 52 du dispositif 2.

La deuxième colonne représente la puissance du faisceau laser rétrodiffusé par la scène 4 au niveau du dispositif 2 dans l'ouverture définie par le diamètre optique de 40 mm : on remarque que cette puissance est inversement proportionnelle à la distance de la première colonne.

La troisième colonne représente la puissance de la partie du faisceau rétrodiffusée sur le récepteur photosensible 46 et transmise entièrement par la lame séparatrice 32, en périphérie de la pastille semi-réfléchissante 34.

La quatrième colonne représente la puissance de la partie du faisceau rétrodiffusée sur le récepteur photosensible 46 et transmise partiellement par la pastille semi-réfléchissante 34.

Enfin, la cinquième colonne du tableau de résultats représente la somme des deux colonnes précédentes, c'est à dire la puissance totale reçue par le récepteur photosensible 46.

On voit que, bien que la puissance rétrodiffusée sur le dispositif 2 varie inversement proportionnellement à la distance du spot 52, la dynamique du faisceau reçu par le récepteur photosensible 46 est inférieure à 3 : elle varie de 0,08 µW à 0,23 µW pour des distances variant de 1 à 90 mètres.

L'association de la lame prismatique 24 avec le miroir sphérique 38 hors d'axe, quant à elle, a pour fonction de compenser l'astigmatisme introduit par ce dernier sur le trajet aller du faisceau émis par l'émetteur laser 20 en direction de la scène 4, comme cela est représenté à la figure 2.

En effet, lorsque l'émetteur laser 20 émet une impulsion laser, la section 20p de la surface d'onde par un plan perpendiculaire à la direction de déplacement de cette impulsion est circulaire. Mais la lame prismatique 24 introduisant une déformation de la surface d'onde de l'impulsion par astigmatisme, sa section 24p devient elliptique entre la lame prismatique 24 et la lame séparatrice 32.

Une réflexion sur la lame séparatrice 32 n'introduisant d'astigmatisme, la section 32pa de la surface d'onde de l'impulsion laser entre cette lame séparatrice 32 et le miroir sphérique 38, est toujours elliptique.

Le miroir sphérique 38, disposé hors d'axe par rapport à la direction incidente de l'impulsion laser, introduit également une déformation par astigmatisme de la surface d'onde de l'impulsion laser, lors de la réflexion de ce dernier sur le miroir sphérique 38. Ainsi, la section 38pa de cette surface d'onde redevient circulaire entre le miroir sphérique 38 et le miroir galvanométrique 42.

Enfin, le miroir galvanométrique 42 n'introduisant pas de déformation par astigmatisme de la surface d'onde des impulsions laser, celle-ci atteint la scène 4, en créant le spot 52 qui est circulaire.

Sur le trajet retour de l'impulsion laser rétrodiffusée par la scène 4 en direction du récepteur photosensible 46, une des fonctions du miroir sphérique 38 hors d'axe est de compenser l'astigmatisme introduit par la lame séparatrice 32, lorsque l'impulsion laser la traverse, comme cela est représenté à la figure 3.

En effet, l'impulsion laser rétrodiffusée par la scène 4 a une surface d'onde dont la section 4p par un plan perpendiculaire à la direction de déplacement de l'impulsion est circulaire entre la scène 4 et le miroir galvanométrique 42.

Après réflexion sur le miroir galvanométrique 42, cette section 42p est toujours circulaire avant d'atteindre le miroir sphérique 38.

Comme cela a été mentionné précédemment, le miroir sphérique 38 disposé hors d'axe par rapport à la direction incidente de l'impulsion laser, introduit un astigmatisme de la surface d'onde de l'impulsion, de sorte qu'après réflexion sur ce dernier et avant d'atteindre la lame séparatrice 32, la section 38pr de la surface d'onde de l'impulsion laser devient elliptique.

De nouveau, la lame séparatrice 32 introduit un astigmatisme lorsque l'impulsion laser la traverse, compensé par celui du miroir sphérique 38, de sorte que la section 32pr de la surface d'onde de cette impulsion redevient circulaire avant d'atteindre la lentille divergente 50.

La lentille divergente 50 et le filtre interférentiel 48 n'introduisent pas de déformation par astigmatisme de la surface d'onde de l'impulsion, ce qui a pour conséquence que l'image du spot 52 au niveau du récepteur photosensible 46 est bien circulaire.

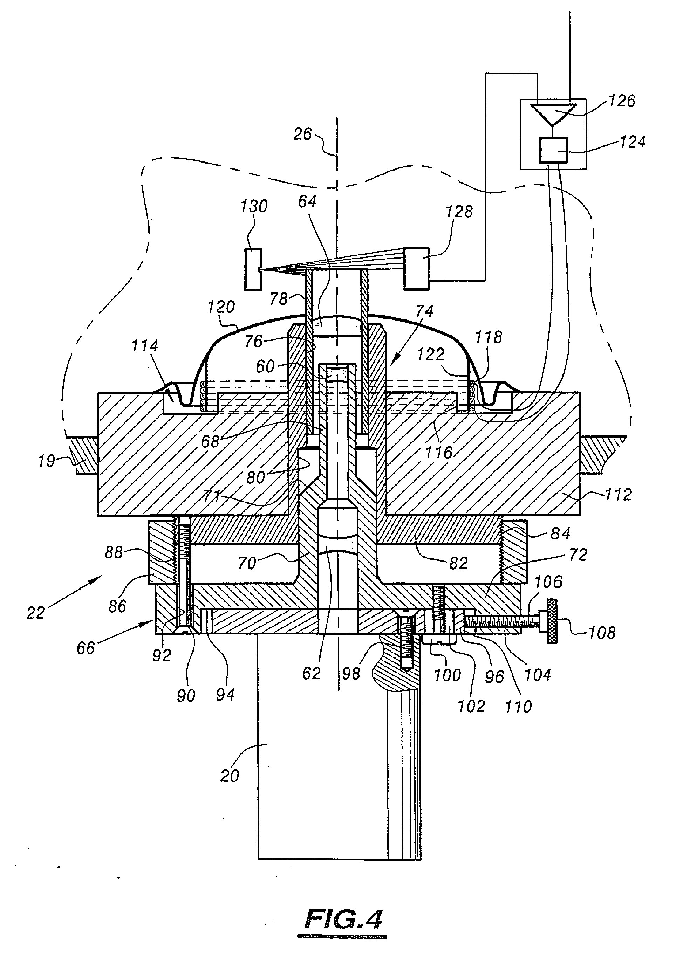

L'ensemble 22 de focalisation automatique du dispositif 2 ainsi que des moyens de fixation de celui-ci sur l'émetteur laser 20 sont représentés à la figure 4.

L'ensemble 22 de focalisation automatique présente une symétrie axiale autour de l'axe vertical 16. Il comporte deux lentilles divergentes 60 et 62 fixes, centrées sur l'axe 16, et une lentille convergente 64, centrée également sur l'axe 16 et pouvant se déplacer en translation le long de cet axe.

Les deux lentilles divergentes 60 et 62 sont disposées dans une première monture tubulaire 66.

Une première partie 68 de faible section de cette monture 66 porte à son extrémité libre la lentille divergente 60.

La première partie cylindrique 68 de la monture est reliée à une deuxième partie 70 de section plus importante, par une zone de transition 71 de forme tronconique.

La lentille divergente 62 est montée dans cette deuxième partie 70.

Une troisième partie 72 formant bride est solidaire de la deuxième partie cylindrique 70 à l'extrémité de celle-ci opposée à la première partie 68.

La monture 66 est montée dans un canon 74 qui comporte un alésage d'extrémité 76 entourant la première partie de faible section 68 de la monture 66 et dans lequel est monté à coulissement un manchon 78 supportant la lentille convergente 64.

Le canon 74 comporte en outre un alésage de plus grand diamètre 80, dont la section correspond à celle de la seconde partie 70 de section plus importante de la monture 66.

Il comporte enfin une collerette radiale 82 opposée à l'alésage d'extrémité 76, et comprenant un filetage extérieur 84.

Avec la collerette 82 coopère une couronne 86 comportant un filetage intérieur 88.

La couronne 86 est interposée entre la collerette 82 et la bride 72 et permet d'assurer le réglage en position axiale de la monture 66 portant les lentilles divergentes 60,62.

Trois vis 90 de blocage de la monture 66 disposées à 120° sont disposées dans des trous axiaux 92 ménagés dans la bride 72, s'étendent à l'intérieur de la couronne 86 et sont engagées dans des trous taraudés 94 ménagés dans la collerette 82 du canon 74.

Dans la face de la bride 72 de la monture 66 opposée à la couronne filetée 86, est ménagé un évidement axial 94 de fixation de l'émetteur laser 20.

Dans cet évidement coaxial avec la monture 66 est montée une embase 96 de diamètre inférieur à celui de l'évidemment 94 et à laquelle l'émetteur laser 20 est fixé par trois vis 98 disposées à 120°.

L'embase 96 est à son tour fixée dans le fond de l'évidemment 94 à l'aide de trois vis 100 à têtes plates disposées à 120° et engagées dans des trous axiaux 102 de plus grand diamètre ménagés dans l'embase 96 et permettant le réglage radial de la position de l'embase et par conséquent de l'émetteur laser 20 par rapport à l'axe d'émission 16 du dispositif 2.

Les vis 100 sont vissées dans la bride 72.

L'évidement 94 est délimité par un rebord périphérique 104 dans lequel sont disposées trois vis 106 de réglage radial de l'émetteur laser 20.

Les vis 106 disposées à 120° présentent chacune par exemple, une tête moletée 108 et une extrémité en contact avec la surface latérale 110 de l'embase 96.

Le canon 74 est entouré par un noyau magnétique 112 dans lequel il est par exemple emmanché à force.

Le noyau magnétique 112 est de forme générale cylindrique et il est coaxial avec le canon 74 et les montures 66 et 78 portant respectivement les lentilles divergentes 60 et 62 et la lentille convergente 60.

Le noyau magnétique 112 est en contact par une de ses faces avec la collerette 82 du canon 74.

Dans la face du noyau magnétique 112 opposée à la collerette 82 est ménagée une gorge annulaire 114 définissant une saillie centrale 116 autour de laquelle est disposée une bobine 118 d'actionnement d'une membrane 120 par l'intermédiaire d'une jupe 122 fixée par une de ses extrémités à la membrane 120.

La membrane souple 120 est fixée à sa périphérie au noyau magnétique 112 de façon classique. Elle est percée en son centre d'un trou circulaire dans lequel est engagé et fixé le manchon 78.

De la sorte, un courant traversant la bobine 118 induit un déplacement de celle-ci le long de l'axe 16 entraînant avec elle, par l'intermédiaire de la membrane souple 120, le manchon 78 qui se déplace alors le long de l'axe 16.

La bobine 118 est alimentée par un générateur de courant 124 dont l'entrée est connectée à la sortie d'un comparateur 126 entre un signal engendré par une photodiode 128 de type PSD, éclairée par un faisceau lumineux provenant d'une diode électroluminescente 130 sur le trajet duquel est placée l'extrémité libre du manchon 78 portant la lentille convergente 64, et un signal correspondant à la distance du spot 52 éclairant la scène 4.

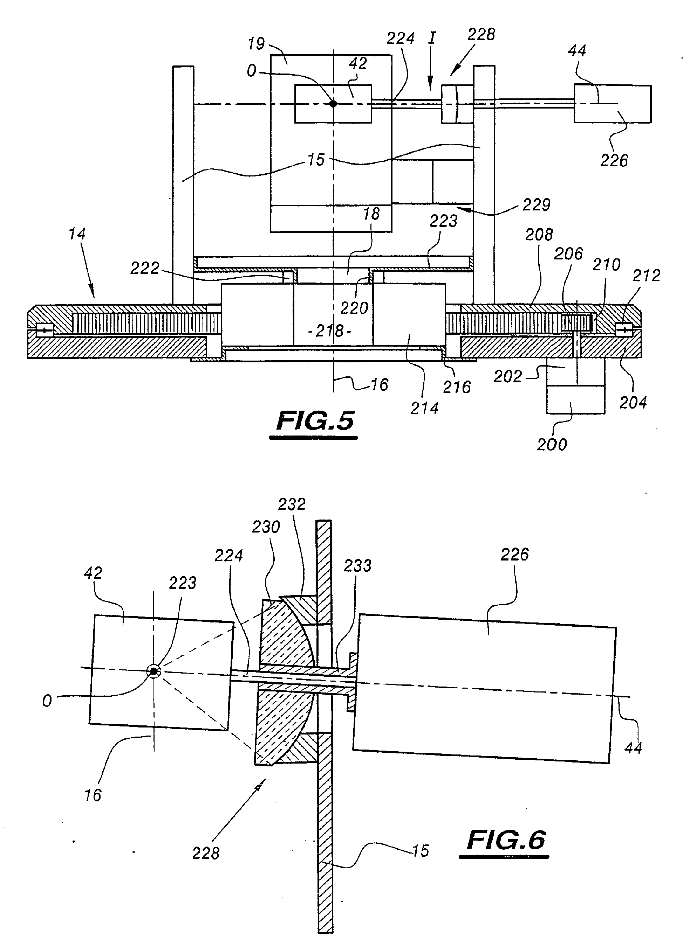

Les moyens de balayage représentés à la figure 5 comprennent le miroir galvanométrique 42 associé à des moyens d'asservissement en position autour des axes orthogonaux 16 et 44, sécants au point 0.

Les moyens d'asservissement en position du miroir 42 autour de l'axe vertical 16 permettent un balayage en gisement de la scène 4 et comportent un moteur pas à pas 200 associé à un réducteur 202, disposés sous une couronne fixe 204 en périphérie de celle-ci. Le réducteur 202 commande la rotation autour d'un axe vertical d'un pignon 206 traversant la couronne fixe 204.

Le pignon 206 entraîne une couronne mobile 208 en rotation autour de l'axe vertical 16, par le biais d'une courroie crantée 210 collée sur la couronne mobile 208.

La rotation de la couronne mobile 208 par rapport à la couronne fixe 204 est assurée par roulement à billes 212 mince, sur jonc, disposé dans une gorge 213 ménagée en périphérie de la couronne mobile 208.

Sur la couronne mobile 208 sont disposées deux plaques verticales telles que la plaque 15, ainsi qu'un plateau 223 fixé sur ces plaques verticales.

La plate-forme 14, décrite en référence à la figure 1, comporte ce plateau 223 et la couronne mobile 208.

La mesure du déplacement en rotation autour de l'axe 16 de la plate-forme 14 est obtenue au moyen d'un codeur optique 214 solidaire de la couronne fixe 204 au moyen d'une couronne de fixation 216. Le codeur 214 est un codeur incrémental annulaire, de type classique.

Dans le passage axial 218 du codeur optique 214, vient s'interposer un rebord cylindrique 220 délimitant l'ouverture axiale 18 du plateau 223, solidaire de la couronne mobile 208.

De façon classique, le codeur optique 214 est pourvu d'une partie mobile 222 bloquée sur le rebord 220 du plateau 223 par des vis de fixation (non représentées). Ceci permet la mesure incrémentale de la rotation en gisement de la plate-forme 14.

Les moyens d'asservissement en position du miroir 42 autour de l'axe horizontal 44 permettent un balayage en site de la scène 4 et comportent un bras de transmission 224 reliant le miroir galvanométrique 42 à un scanner galvanométrique 226, de type classique. Le bras de transmission 224 est fixé sur la plaque 15 par l'intermédiaire de premiers moyens 228 de réglage de l'axe de rotation 44 et permet la transmission au miroir 42 de la rotation autour de l'axe 44, commandée par le scanner galvanométrique 226.

Ces premiers moyens de réglage 228 seront détaillés par la suite, en référence à la figure 6.

Ainsi, le miroir galvanométrique 42 est à la fois asservi en position autour de l'axe horizontal 44 au moyen du scanner galvanométrique 226, et asservi en position autour de l'axe vertical 16, au moyen du moteur 200.

Par ailleurs, la monture 19 est fixée sur la plaque 15, par l'intermédiaire de seconds moyens 229 de réglage de l'axe optique 36.

Ces seconds moyens de réglage seront détaillés par la suite, en référence à la figure 7.

Les premiers moyens de réglage 228 représentés à la figure 6 comprennent un berceau 230 formé d'une portion de couronne verticale dont le centre est positionné sur l'axe vertical 16, au point 0 situé au centre du miroir galvanométrique 42. Le berceau 230 glisse en rotation sur un support de berceau 232 de même rayon à axe creux, autour d'un axe horizontal 233, perpendiculaire à l'axe 16 et à l'axe 44, parallèle à la plaque 15 et passant par 0. Le support de berceau 232 est fixé sur la plaque 15.

Le bras de transmission 224 est monté, libre en rotation autour de son axe, à l'intérieur d'un manchon 233 solidaire du berceau 230.

La rotation du berceau 230 autour de l'axe horizontal 223 dans le support de berceau 232 entraîne la rotation autour de ce même axe de l'ensemble constitué par le miroir galvanométrique 42, le manchon 233, le bras de transmission 224 et le scanner galvanométrique 226, monté sur ce berceau 230.

Les seconds moyens de réglage 229 représentés en vue de dessus à la figure 7 comportent un berceau 234 formé d'une portion de couronne horizontale dont le centre est positionné sur l'axe vertical 16.

Le berceau 234 glisse en rotation sur un support de berceau 236 de même rayon, autour d'un axe perpendiculaire à l'axe 44 et dans le plan contenant l'axe vertical 16. Ce support de berceau 236 est fixé sur la plaque 15.

La rotation autour de cet axe du berceau 234 entraîne la rotation de la monture 19 et donc de l'axe optique 36 autour de ce même axe.

Ainsi, les moyens de réglage 228 et 229 permettent le réglage de l'axe optique 36 et de l'axe 44 de rotation du miroir galvanométrique 42, par compensation d'imperfections de construction, telles que par exemple le montage imprécis du miroir galvanométrique 42 sur le bras 224 destiné à l'entraîner en rotation.

Ainsi les moyens de balayage peuvent fournir un balayage rigoureusement plan.

En référence à la figure 8, le récepteur photosensible 46 est associé à des moyens 300 de réduction de la dynamique du signal fourni en sortie de ce récepteur photosensible 46. Ces moyens 300 sont intégrés à la partie électronique 12 de la figure 1.

En effet, le récepteur photosensible 46 comprend une photodiode à avalanche fournissant en sortie un courant dont l'intensité dépend directement de l'énergie du faisceau laser qu'il a reçu.

Les moyens 300 de réduction de la dynamique comprennent un amplificateur transimpédance 302 fournissant en sortie un signal électrique dont la tension est proportionnelle à l'intensité du courant fourni en entrée par la photodiode à avalanche. Ce signal électrique est transmis à un atténuateur de tension programmable 304, associé de façon classique, à des moyens de programmation 306.

Les moyens 300 de réduction de la dynamique comportent en outre deux amplificateurs à gain fixe 308 disposés en série, en sortie de l'atténuateur 304. Le nombre d'amplificateurs 308 peut être différent de deux.

Le signal électrique fourni en sortie des amplificateurs à gain fixe 308 alimente un circuit d'adaptation d'impédance 310, de type classique. Par exemple, ce circuit d'adaptation d'impédance 310 comporte deux résistances 312, de 50 Ohms chacune.

Le signal électrique fourni en sortie de ce circuit d'adaptation d'impédance 310 alimente des moyens 314 de mesure du "temps de vol" du faisceau laser implémentés sur un circuit intégré. Ces moyens de mesure 314 sont de type classique. Ils sont par exemple du type décrit dans le brevet français n° 94 11 847 du Commissariat à l'Energie Atomique. Ils sont notamment adaptés pour fournir aux moyens de programmation, une valeur numérique de l'énergie du signal qui leur est transmis par le circuit d'adaptation d'impédance 310.

Les moyens de programmation 306 déterminent et règlent le gain de l'atténuateur 304 à une valeur inversement proportionnelle à cette valeur numérique fournie par les moyens de mesure 314 du "temps de vol", pour fournir en sortie de l'atténuateur 304, un signal dont la tension est constante quelle que soit l'énergie du faisceau laser reçu par la photodiode 46.

En référence à la figure 9, une sonde de température 316 de type classique est disposée au voisinage de la photodiode 46. La tension correspondant à la température mesurée par cette sonde 316 est transmise à un convertisseur analogique-numérique 318 de type classique, pour transmettre une valeur numérique de cette température à un calculateur 320 par l'intermédiaire d'un bus 322 de transmission de données.

En retour, le calculateur 320 transmet par l'intermédiaire du bus 322, un coefficient multiplicateur à un convertisseur numérique-analogique multiplicateur 324 et une valeur numérique de consigne à un convertisseur numérique-analogique 326.

Le coefficient multiplicateur dépend de la nature de la sonde de température 316 et de la nature de la photodiode 46, mais est indépendant de la température mesurée par la sonde 316, alors que la valeur numérique de consigne fournie au convertisseur 326 dépend de la température mesurée par la sonde 316 et correspond à une valeur de gain prédéterminée de la photodiode 46, à une température donnée. Cette valeur de gain est fournie, par exemple, par un tableau de données accessible de façon classique par le calculateur 320.

De façon classique, le convertisseur numérique-analogique multiplicateur 324 comporte une entrée de référence et une entrée numérique. Il reçoit, sur son entrée de référence, la tension correspondant à la température mesurée par la sonde 316 et sur son autre entrée numérique, le coefficient multiplicateur.

Il fournit en sortie une tension de correction dont la valeur est égale au produit du coefficient multiplicateur par la tension correspondant à la température mesurée par la sonde 316.

Un amplificateur sommateur 328 reçoit en entrée cette tension de correction ainsi qu'une tension de consigne fournie en sortie du convertisseur numérique-analogique 326 et donc directement liée à la valeur numérique de consigne fournie par le calculateur 320.

Cet amplificateur sommateur 328 fournit en sortie une tension de commande égale à la somme de la tension de correction et de la tension de consigne. Cette valeur de tension permet de conserver un gain constant de la photodiode 46, indépendamment des variations de température.

La tension de commande est alors appliquée à des moyens 330 d'alimentation de la photodiode 46, de type classique, pour régler la tension de polarisation de la photodiode 46 conformément à la tension de commande fournie par l'amplificateur sommateur 328.

Dans la partie électronique 12 du dispositif précédemment décrit, un procédé de désignation d'une zone d'intérêt sur la scène 4 est mis en oeuvre.

Lors d'une première étape, on procède au relevé tridimensionnel d'un ensemble de points de la scène 4.

Lors d'une étape suivante, on procède au stockage dans la partie électronique 12, des coordonnées sphériques de l'ensemble des points relevés. Ces coordonnées comprennent la distance entre le centre O du miroir galvanométrique 42 le spot 52, un angle mesurant l'orientation en gisement du faisceau laser à la sortie des moyens de balayage et un angle mesurant l'orientation en site de ce même faisceau laser.

Lors d'une troisième étape, on modélise et/ou on visualise ledit ensemble de points.

Lors d'une étape suivante, on sélectionne dans cet ensemble de points modélisé et/ou visualisé, un sous-ensemble constitué d'au moins un point dudit ensemble, définissant ladite zone d'intérêt.

Enfin, lors d'une dernière étape, on pilote les moyens de balayage 14,42,200,202,204,206,210,212,224,226, ainsi que l'émetteur 20, pour que le spot 52 créé sur la scène 4 par le faisceau laser désigne successivement au moins une partie des points du sous-ensemble sélectionné correspondant à ladite zone d'intérêt.

Cette zone d'intérêt est constituée d'un ensemble de points qui ne sont pas nécessairement jointifs.

Il apparaît clairement que l'invention, illustrée dans l'exemple décrit précédemment, permet de créer un dispositif de relèvement tridimensionnel capable d'effectuer des mesures s'étendant sur une gamme importante de distance, en compensant l'effet de dynamique dû à une énergie du faisceau rétrodiffusé inversement proportionnelle au carré de la distance entre le spot 52 et le dispositif 2, par une grande focale des moyens de focalisation, tout en présentant un encombrement réduit.

Un deuxième avantage du dispositif précédemment décrit est de compenser à l'aide d'un miroir sphérique disposé hors d'axe par rapport au faisceau laser émis et rétrodiffusé, les déformations de la surface d'onde du faisceau provoquées par la lame séparatrice 32, pour que l'image du spot 52 au niveau du récepteur photosensible 46 soit circulaire.

Un autre avantage du dispositif précédemment décrit, est de compenser les déformations de la surface d'onde du faisceau provoquées par le miroir sphérique 38, sur le trajet aller du faisceau laser, entre l'émetteur laser 20 et la scène 4, à l'aide d'une lame prismatique 24 disposée entre l'émetteur laser 20 et la lame séparatrice 32.

Un autre avantage du dispositif précédemment décrit, est de permettre, grâce à une pastille semi-réfléchissante disposée sur la lame séparatrice 32, d'effectuer des mesures, même lorsque le spot est très proche du dispositif de relèvement tridimensionnel.

Un autre avantage du dispositif précédemment décrit, est de compenser la dynamique importante des faisceaux laser rétrodiffusés par la scène 4, liée à l'indicatrice de diffusion de ladite scène 4, grâce à des moyens de réduction de la dynamique du signal fourni en sortie du récepteur photosensible 46.

Un autre avantage du dispositif précédemment décrit, est de permettre un balayage en gisement pouvant atteindre 360°, tout en permettant le passage de connexions électriques entre la partie électronique et la partie opto-mécanique du dispositif, grâce à des moyens de balayage comportant une plate-forme percée d'une ouverture axiale.

Un autre avantage du dispositif précédemment décrit est de permettre un balayage plan de la scène 4, et donc d'éviter des déformations d'un ensemble de points relevés sur la scène 4, grâce à des moyens de réglage des moyens d'asservissement en position du miroir galvanométrique 42 et des moyens de réglage de l'axe de réception du faisceau laser.

Un autre avantage du dispositif précédemment décrit est de fournir une bonne résolution spatiale de la mesure sur la cible, grâce à un ensemble de focalisation automatique du faisceau laser émis par l'émetteur 20.

Enfin, un autre avantage du dispositif précédemment décrit est de mettre en oeuvre un procédé permettant de désigner, dans le repère du dispositif 2, une zone d'intérêt sur la scène 4, au moyen du faisceau laser, cette zone d'intérêt n'étant pas nécessairement accessible par un opérateur ou facilement matérialisable.

Ce procédé peut être appliqué par exemple pour désigner le tracé d'une découpe à réaliser sur une tuyauterie.

## Revendications

1. Dispositif de relèvement tridimensionnel d'une scène (4), comprenant un émetteur laser (20), des moyens de balayage (14, 42, 200, 202, 204, 206, 210, 212, 224, 226) selon des premier et second axes de rotation (16, 44) pour balayer la scène (4) à l'aide d'un faisceau laser émis par l'émetteur laser (20), un récepteur photosensible (46) d'une image d'un spot (52) créé par le faisceau laser sur la scène (4), des moyens (38, 50) de focalisation du faisceau laser rétrodiffusé par la scène (4) vers le récepteur photosensible (46), des premiers moyens (214, 226) de mesure de l'orientation du faisceau à la sortie des moyens de balayage (14, 42, 200, 202, 204, 206, 210, 212, 224, 226), et des seconds moyens (24, 28, 32, 34, 48, 314) de mesure de la distance entre le dispositif et le spot par télémétrie laser, lesdits seconds moyens de mesure comprenant une lame séparatrice (32) des faisceaux émis et rétrodiffusé par la scène (4), lesdits moyens de balayage (14, 42, 200, 202, 204, 206, 210, 212, 224, 226) comportent au moins un miroir (42) disposé sur le trajet des faisceaux laser émis et rétrodiffusé, entre les moyens de focalisation (38, 50) et la scène (4), **caractérisé en ce que** les moyens de focalisation (38, 50) comportent un système optique convergent (38) qui compense l'astigmatisme introduit par la lame séparatrice (32) associé à un système optique divergent (50) d'augmentation de la distance focale du système optique convergent formant ainsi un téléobjectif.

2. Dispositif de relèvement tridimensionnel selon la revendication 1, **caractérisé en ce que** le système optique convergent (38) comprend un miroir sphérique disposé hors axe par rapport au faisceau laser émis et rétrodiffusé.

3. Dispositif de relèvement tridimensionnel selon la revendication 1 ou 2, **caractérisé en ce que** les seconds moyens de mesure comprennent, disposée entre l'émetteur laser (20) et la lame séparatrice (32), une lame prismatique (24) de compensation des déformations de la surface d'onde du faisceau émis provoquées par le miroir sphérique (38) hors d'axe.

4. Dispositif de relèvement tridimensionnel selon la revendication 3, dont les seconds moyens de mesure comprennent en outre des moyens (24, 28, 314) de mesure de l'instant d'émission du faisceau laser et des moyens (48, 314) de mesure de l'instant de réception par le récepteur photosensible (46) du faisceau rétrodiffusé par la scène (4), **caractérisé en ce que** les moyens de mesure de l'instant d'émission du faisceau laser comportent une fibre optique (28) recevant une partie du faisceau laser réfléchie hors d'axe par la lame prismatique (24) et la transmettant à un récepteur photosensible (29).

5. Dispositif de relèvement tridimensionnel selon l'une quelconque des revendications 1 à 4, **caractérisé en ce que** le système optique divergent (50) comprend une lentille divergente disposée sur le trajet du faisceau rétrodiffusé, entre la lame séparatrice (32) et le récepteur photosensible (46).

6. Dispositif de relèvement tridimensionnel selon l'une quelconque des revendications 1 à 5, **caractérisé en ce que** la lame séparatrice (32) comporte une pastille semi-réfléchissante (34) de réduction de la dynamique de l'énergie du faisceau laser rétrodiffusé par la scène (4) et reçu par le récepteur photosensible (46).

7. Dispositif de relèvement tridimensionnel selon l'une quelconque des revendications 1 à 6, **caractérisé en ce que** le récepteur photosensible (46) comprend une photodiode, et **en ce que** cette photodiode à avalanche est associée à des moyens (330) de compensation de température.

8. Dispositif de relèvement tridimensionnel selon la revendication 7, **caractérisé en ce que** les moyens (330) de compensation de température comportent une sonde de température (316) et sont des moyens de réglage de la tension de polarisation du récepteur photosensible (46), en fonction de la température mesurée par cette sonde (316).

9. Dispositif de relèvement tridimensionnel selon l'une quelconque des revendications 1 à 8, **caractérisé en ce que** les moyens de balayage (14, 42, 200, 202, 204, 206, 210, 212, 224, 226) comprennent un miroir plan (42) et des moyens d'asservissement (14, 200, 202, 206, 224, 226) de la position de ce miroir autour de chacun desdits premier et second axes de rotation (16, 44) desdits moyens de balayage.

10. Dispositif de relèvement tridimensionnel selon la revendication 9, comportant une partie opto-mécanique (10) et une partie électronique (12), **caractérisé en ce que** le premier axe de rotation (16) est un axe de rotation en gisement, et **en ce que** les moyens d'asservissement (14, 200, 202, 206) autour de cet axe, comportent une plate-forme (14) entraînée en rotation autour de cet axe par un moteur pas à pas (200) et percée d'une ouverture axiale (18) pour le passage de moyens de connexion électrique (18a) entre des éléments de la partie opto-mécanique (10) et des éléments de la partie électronique.

11. Dispositif de relèvement tridimensionnel selon la revendication 10, **caractérisé en ce que** la plate-forme (14) est disposée sur une couronne fixe (204) par l'intermédiaire de moyens (212) de roulement à billes sur jonc, disposés entre la plate-forme (14) et la couronne fixe (204).

12. Dispositif de relèvement tridimensionnel selon la revendication 11, **caractérisé en ce que** le moteur pas à pas (200) est disposée sous la couronne fixe (204) en périphérie de celle-ci et est associé à un pignon (206) d'entraînement de la plate-forme (14) en rotation autour du premier axe (16), par l'intermédiaire d'une courroie crantée (210) portée par la plate-forme (14).

13. Dispositif de relèvement tridimensionnel selon l'une quelconque des revendications 9 à 12, **caractérisé en ce que** le second axe de rotation (44) est un axe de rotation en site, et **en ce que** les moyens d'asservissement (224, 226) autour de cet axe comportent un bras de transmission (224), dont l'axe est fixé par rapport à la plate-forme (14), reliant le miroir (42) à un scanner galvanométrique (226) d'entraînement en rotation du miroir (42) autour dudit second axe (44).

14. Dispositif de relèvement tridimensionnel selon l'une quelconque des revendications 10 à 13, **caractérisé en ce que** les premiers moyens de mesure (214, 226) comportent un codeur optique incrémental annulaire (214) de mesure de l'orientation du faisceau en gisement, porté par la plate-forme (14).

15. Dispositif de relèvement tridimensionnel selon la revendication 14, **caractérisé en ce que** le codeur optique (214) est solidaire de la couronne fixe (204) et est pourvu d'une partie mobile (222) solidaire de la plate-forme (14).

16. Dispositif de relèvement tridimensionnel selon l'une quelconque des revendications 1 à 15, **caractérisé en ce qu'**il comporte en outre un ensemble (22) de focalisation automatique du faisceau laser émis par l'émetteur laser (20) et des moyens de fixation (96, 98, 100, 108) de l'émetteur laser (20) sur l'ensemble (22).

17. Dispositif de relèvement tridimensionnel selon la revendication 16, **caractérisé en ce qu**e lesdits moyens de fixation (96, 98, 100, 108) comportent une embase (96) portant l'émetteur laser (20) et fixé sur l'ensemble (22) de focalisation automatique au moyen de vis (100) engagées dans des trous axiaux (102) de plus grand diamètre ménagés dans l'embase (96), et des vis (106) de réglage radial de l'émetteur laser (20) sur l'ensemble (22) de focalisation automatique.

18. Dispositif de relèvement tridimensionnel selon l'une quelconque des revendications 16 et 17, **caractérisé en ce** l'ensemble (22) de focalisation automatique du faisceau laser comporte au moins une lentille divergente (60, 62) disposée sur l'axe d'émission (26) du faisceau laser, une lentille convergente (64) disposée également sur l'axe d'émission (26) et des moyens (78, 118, 120, 122, 124, 126, 128, 130) de déplacement relatif de la lentille convergente (64) et de la lentille divergente (60, 62) le long de l'axe d'émission (26).

19. Dispositif de relèvement tridimensionnel selon la revendication 18, **caractérisé en ce que** lesdits moyens (78, 118, 120, 122, 124, 126, 128, 130) de déplacement relatif comportent un manchon (78) supportant la lentille convergente (64) autour duquel est fixé une membrane souple (120) et des moyens (118, 124, 126, 128, 130) d'actionnement de la membrane (120) en vue du déplacement dudit manchon (78), le long de l'axe (26).

20. Dispositif de relèvement tridimensionnel selon la revendication 19, **caractérisé en ce que** les moyens (118, 124, 126, 128, 130) d'actionnement de la membrane souple (120) comprennent un générateur de courant (124) et une bobine (118), alimentée en courant par le générateur de courant (124), fixée sur la membrane souple (120) et disposée dans l'entrefer d'un noyau magnétique (112), autour de l'axe d'émission (26).

21. Dispositif de relèvement tridimensionnel selon la revendication 19 ou 20, **caractérisé en ce que** les moyens (118, 124, 126, 128, 130) d'actionnement de la membrane souple (120) comportent des moyens (126) de comparaison entre la position détectée de la lentille convergente (64) et la position souhaitée de la lentille convergente (64) le long de l'axe (26) comportant des moyens d'activation du générateur de courant (124) en fonction de cette différence.

22. Dispositif de relèvement tridimensionnel selon l'une quelconque des revendications 16 à 21, **caractérisé en ce que** l'ensemble (22) de focalisation automatique comporte des moyens (128, 130) optiques de détection de la position de la lentille convergente (64) sur l'axe d'émission (26).

23. Dispositif de relèvement tridimensionnel selon l'une quelconque des revendications 9 à 22, **caractérisé en ce qu**'il comporte des moyens de réglage (228) des moyens d'asservissement en position du miroir galvanométrique (42) autour de l'axe (44) de rotation en site et des moyens de réglage (229) de l'axe (36) de réception du faisceau laser autour de l'axe (16) de rotation en gisement.

24. Dispositif de relèvement tridimensionnel selon la revendication 23, **caractérisé en ce que** les moyens de réglage (228) des moyens d'asservissement en position du miroir galvanométrique (42) et les moyens (229) de réglage de l'axe (36) de réception du faisceau, comprennent chacun un berceau (230, 234) formé d'une portion de couronne et chacun un support de berceau correspondant (232, 236) dans lequel le berceau glisse en rotation autour de l'axe de ladite couronne.

25. Dispositif de relèvement tridimensionnel selon la revendication 24, **caractérisé en ce que** l'axe de rotation du berceau (230) des moyens de réglage (228) des moyens d'asservissement en position du miroir galvanométrique est perpendiculaire à l'axe (44) rotation en site et à l'axe (16) de rotation en gisement, et **en ce que** l'axe de rotation du berceau (234) des moyens de réglage (229) de l'axe (36) de réception est perpendiculaire à l'axe (44) de rotation en site et dans un plan vertical contenant l'axe (16) de rotation en gisement, lesdits axes de rotation des berceaux (230, 234) étant sécants au centre du miroir (42).

26. Dispositif de relèvement tridimensionnel selon l'une quelconque des revendications 1 à 25, **caractérisé en ce qu'**il comprend en outre des moyens (300) de réduction de la dynamique du signal fourni en sortie du récepteur photosensible (46).

27. Dispositif de relèvement tridimensionnel selon la revendication 26, **caractérisé en ce que** les moyens (300) de réduction de la dynamique du signal comportent un atténuateur de tension (304) à gain programmable et un ensemble (308) d'amplification à gain fixe en sortie de cet atténuateur (304).

28. Dispositif de relèvement tridimensionnel selon l'une quelconque des revendications 1 à 27, **caractérisé en ce** les moyens (24, 28, 32, 34, 48, 314) de mesure de la distance entre le dispositif et le spot comportent un circuit intégré (314) de mesure du « temps de vol » du faisceau laser.

29. Procédé de désignation d'une zone d'intérêt sur une scène (4) mis en oeuvre dans un dispositif de relèvement tridimensionnel selon l'une quelconque des revendications 1 à 28, comportant les étapes suivantes :
- le relevé tridimensionnel d'un ensemble de points de la scène (4) ;
- le stockage (12) des coordonnées de l'ensemble de points relevés ;
- la modélisation et/ou visualisation dudit ensemble de points ;
**caractérisé en ce qu**'il comporte en outre les étapes suivantes :
- la sélection d'un sous-ensemble d'au moins un point dudit ensemble, définissant ladite zone d'intérêt ; et
- le pilotage des moyens de balayage (14, 42, 200, 202, 204, 206, 210, 212, 224, 226) et de l'émetteur (20) pour que le spot (52) créé sur la scène (4) par le faisceau laser désigne successivement au moins une partie des poins du sous-ensemble sélectionné correspondant à ladite zone d'intérêt.

## Claims

1. Device for the three-dimensional recording of a scene (4), comprising a laser emitter (20), means (14, 42, 200, 202, 204, 206, 210, 212, 224, 226) for scanning along first and second rotation axes (16, 44) in order to scan the scene (4) using a laser beam emitted by the laser emitter (20), a photosensitive receiver (46) of an image of a spot (52) created by the laser beam on the scene (4), means (38, 50) for focusing the laser beam backscattered by the scene (4) towards the photosensitive receiver (46), first means (214, 226) for measuring the orientation of the beam at the outlet of the scanning means (14, 42, 200, 202, 204, 206, 210, 212, 224, 226), and second means (24, 28, 32, 34, 48, 314) for measuring the distance between the device and the spot by laser telemetry, the said second measuring means comprising a plate (32) for separating the emitted beam and the beam backscattered by the scene (4), the said scanning means (14, 42, 200, 202, 204, 206, 210, 212, 224, 226) including at least one mirror (42) arranged in the path of the emitted and backscattered laser beams between the focusing means (38, 50) and the scene (4), **characterised in that** the focusing means (38, 50) include a convergent optical system (38) which compensates for the astigmatism introduced by the separating plate (32), associated with a divergent optical system (50) for increasing the focal length of the convergent optical system, thus forming a teleobjective.

2. Three-dimensional recording device according to Claim 1, **characterised in that** the convergent optical system (38) comprises a spherical mirror arranged off-axis with respect to the emitted and backscattered laser beam.

3. Three-dimensional recording device according to Claim 1 or 2, **characterised in that** the second measuring means comprise, arranged between the laser emitter (20) and the separating plate (32), a prismatic plate (24) for compensating for the deformations of the wave surface of the emitted beam which are caused by the off-axis spherical mirror (38).

4. Three-dimensional recording device according to Claim 3, the second measuring means of which furthermore comprise means (24, 28, 314) for measuring the instant at which the laser beam is emitted and means (48, 314) for measuring the instant at which the beam backscattered by the scene (4) is received by the photosensitive receiver (46), **characterised in that** the means for measuring the instant at which the laser beam is emitted include an optical fibre (28) which receives part of the laser beam reflected off-axis by the prismatic plate (24) and transmits it to a photosensitive receiver (29).

5. Three-dimensional recording device according to any one of Claims 1 to 4, **characterised in that** the divergent optical system (50) comprises a divergent lens arranged in the path of the backscattered beam between the separating plate (32) and the photosensitive receiver (46).

6. Three-dimensional recording device according to any one of Claims 1 to 5, **characterised in that** the separating plate (32) includes a semi-reflective patch (34) for reducing the dynamics of the energy of the laser beam backscattered by the scene (4) and received by the photosensitive receiver (46).

7. Three-dimensional recording device according to any one of Claims 1 to 6, **characterised in that** the photosensitive receiver (46) comprises a photodiode, and **in that** this avalanche photodiode is associated with temperature compensation means (330).

8. Three-dimensional recording device according to Claim 7, **characterised in that** the temperature compensation means (330) include a temperature probe (316) and are means for adjusting the bias voltage of the photosensitive receiver (46) depending on the temperature measured by this probe (316).

9. Three-dimensional recording device according to any one of Claims 1 to 8, **characterised in that** the scanning means (14, 42, 200, 202, 204, 206, 210, 212, 224, 226) comprise a plane mirror (42) and means (14, 200, 202, 206, 224, 226) for controlling the position of this mirror about each of the said first and second rotation axes (16, 44) of the said scanning means.

10. Three-dimensional recording device according to Claim 9, including an opto-mechanical part (10) and an electronic part (12), **characterised in that** the first rotation axis (16) is a relative bearing rotation axis, and **in that** the means (14, 200, 202, 206) for controlling about this axis include a platform (14) driven in rotation about this axis by a stepper motor (200) and pierced by an axial opening (18) for the passage of means (18a) for electrical connection between elements of the opto-mechanical part (10) and elements of the electronic part.

11. Three-dimensional recording device according to Claim 10, **characterised in that** the platform (14) is arranged on a fixed ring (204) via ball bearing means (212) on a retaining ring, which are arranged between the platform (14) and the fixed ring (204).

12. Three-dimensional recording device according to Claim 11, **characterised in that** the stepper motor (200) is arranged beneath the fixed ring (204) at the periphery thereof and is linked to a pinion (206) for driving the platform (14) in rotation about the first axis (16) via a notched belt (210) carried by the platform (14).

13. Three-dimensional recording device according to any one of Claims 9 to 12, **characterised in that** the second rotation axis (44) is an elevation rotation axis, and **in that** the means (224, 226) for controlling about this axis include a transmission arm (224), the axis of which is fixed with respect to the platform (14), connecting the mirror (42) to a galvanometric scanner (226) for driving the mirror (42) in rotation about the said second axis (44).

14. Three-dimensional recording device according to any one of Claims 10 to 13, **characterised in that** the first measuring means (214, 226) include an annular incremental optical encoder (214) for measuring the relative bearing orientation of the beam, the encoder being carried by the platform (14).

15. Three-dimensional recording device according to Claim 14, **characterised in that** the optical encoder (214) is fastened to the fixed ring (204) and is provided with a movable part (222) fastened to the platform (14).

16. Three-dimensional recording device according to any one of Claims 1 to 15, **characterised in that** it furthermore includes a unit (22) for automatically focusing the laser beam emitted by the laser emitter (20) and means (96, 98, 100, 108) for fixing the laser emitter (20) to the unit (22).

17. Three-dimensional recording device according to Claim 16, **characterised in that** the said fixing means (96, 98, 100, 108) include a baseplate (96) carrying the laser emitter (20) and fixed to the automatic focusing unit (22) by means of screws (100) engaged in axial holes (102) of larger diameter which are made in the baseplate (96), and screws (106) for the radial adjustment of the laser emitter (20) on the automatic focusing unit (22).

18. Three-dimensional recording device according to either one of Claims 16 and 17, **characterised in that** the unit (22) for automatically focusing the laser beam includes at least one divergent lens (60, 62) arranged on the emission axis (26) of the laser beam, a convergent lens (64) also arranged on the emission axis (26) and means (78, 118, 120, 122, 124, 126, 128, 130) for the relative displacement of the convergent lens (64) and of the divergent lens (60, 62) along the emission axis (26).

19. Three-dimensional recording device according to Claim 18, **characterised in that** the said relative displacement means (78, 118, 120, 122, 124, 126, 128, 130) include a sleeve (78) supporting the convergent lens (64), around which sleeve a flexible membrane (120) is fixed, and means (118, 124, 126, 128, 130) for actuating the membrane (120) for the purpose of displacing the said sleeve (78) along the axis (26).

20. Three-dimensional recording device according to Claim 19, **characterised in that** the means (118, 124, 126, 128, 130) for actuating the flexible membrane (120) comprise a current generator (124) and a coil (118) which is fed with current by the current generator (124), is fixed to the flexible membrane (120) and is arranged in the gap of a magnetic core (112), around the emission axis (26).

21. Three-dimensional recording device according to Claim 19 or 20, **characterised in that** the means (118, 124, 126, 128, 130) for actuating the flexible membrane (120) include means (126) for comparing the detected position of the convergent lens (64) with the desired position of the convergent lens (64) along the axis (26), including means for activating the current generator (124) depending on this difference.

22. Three-dimensional recording device according to any one of Claims 16 to 21, **characterised in that** the automatic focusing unit (22) includes optical means (128, 130) for detecting the position of the convergent lens (64) on the emission axis (26).

23. Three-dimensional recording device according to any one of Claims 9 to 22, **characterised in that** it includes means of adjustment (228) of the means for controlling the position of the galvanometric mirror (42) about the elevation rotation axis (44) and means of adjustment (229) of the axis (36), along which the laser beam is received, about the relative bearing rotation axis (16).

24. Three-dimensional recording device according to Claim 23, **characterised in that** the means of adjustment (228) of the means for controlling the position of the galvanometric mirror (42) and the means of adjustment (229) of the axis (36) along which the beam is received each comprise a cradle (230, 234) formed from a portion of a ring and each comprise a corresponding cradle support (232, 236) in which the cradle slides so as to rotate about the axis of the said ring.

25. Three-dimensional recording device according to Claim 24, **characterised in that** the rotation axis of the cradle (230) of the means of adjustment (228) of the means for controlling the position of the galvanometric mirror is perpendicular to the elevation rotation axis (44) and to the relative bearing rotation axis (16), and **in that** the rotation axis of the cradle (234) of the means of adjustment (229) of the reception axis (36) is perpendicular to the elevation rotation axis (44) and in a vertical plane containing the relative bearing rotation axis (16), the said rotation axes of the cradles (230, 234) intersecting at the centre of the mirror (42).

26. Three-dimensional recording device according to any one of Claims 1 to 25, **characterised in that** it furthermore comprises means (300) for reducing the dynamics of the signal which is output by the photosensitive receiver (46).

27. Three-dimensional recording device according to Claim 26, **characterised in that** the means (300) for reducing the dynamics of the signal include a voltage attenuator (304) with a programmable gain and an amplification unit (308) with a fixed gain at the output of this attenuator (304).

28. Three-dimensional recording device according to any one of Claims 1 to 27, **characterised in that** the means (24, 28, 32, 34, 48, 314) for measuring the distance between the device and the spot include an integrated circuit (314) for measuring the "time of flight" of the laser beam.

29. Method for designating an area of interest on a scene (4) carried out in a three-dimensional recording device according to any one of Claims 1 to 28, including the following steps:
- three-dimensional recording of a set of points of the scene (4);
- storage (12) of the coordinates of the set of points recorded;
- modelling and/or display of the said set of points; **characterised in that** it furthermore includes the following steps:
- selection of a subset of at least one point in the said set, defining the said area of interest; and
- control of the scanning means (14, 42, 200, 202, 204, 206, 210, 212, 224, 226) and of the emitter (20) so that the spot (52) created on the scene (4) by the laser beam designates successively at least some of the points of the selected subset corresponding to the said area of interest.

## Patentansprüche

1. Vorrichtung zum dreidimensionalen Messen einer Szene (4), umfassend einen Lasersender (20), Mittel (14, 42, 200, 202, 204, 206, 210, 212, 224, 226) zum Abtasten gemäß einer ersten und einer zweiten Drehachse (16, 44), um die Szene (4) mit Hilfe eines von dem Lasersender (20) gesendeten Laserstrahls abzutasten, einen fotoempfindlichen Empfänger (46) für ein Bild eines durch den Laserstrahl auf der Szene (4) erzeugten Spots (52), Mittel (38, 50) zum Fokussieren des von der Szene (4) zu dem fotoempfindlichen Empfänger (46) zurückgestreuten Laserstrahls, erste Mittel (214, 226) zum Messen der Ausrichtung des Strahls am Austritt der Abtastmittel (14, 42, 200, 202, 204, 206, 210, 212, 224, 226) und zweite Mittel (24, 28, 32, 34, 48, 314) zum Messen des Abstands zwischen der Vorrichtung und dem Spot durch Lasertelemetrie, wobei die zweiten Messmittel eine Teilerplatte (32) zum Teilen des gesendeten und des durch die Szene (4) zurückgestreuten Strahls umfassen, wobei die Abtastmittel (14, 42, 200, 202, 204, 206, 210, 212, 224, 226) mindestens einen Spiegel (42) umfassen, der auf dem Weg des gesendeten und des zurückgestreuten Laserstrahls zwischen den Fokussierungsmitteln (38, 50) und der Szene (4) angeordnet sind, **dadurch gekennzeichnet, dass** die Fokussierungsmittel (38, 50) ein konvergierendes optisches System (38) umfassen, das den Astigmatismus kompensiert, der durch die Teilerplatte (32) eingeführt wird, die einem divergierenden optischen System (50) zur Vergrößerung der Brennweite des konvergierenden optischen Systems zugeordnet ist, das auf diese Weise ein Teleobjektiv bildet.

2. Vorrichtung zum dreidimensionalen Messen nach Anspruch 1, **dadurch gekennzeichnet, dass** das konvergierende optische System (38) einen sphärischen Spiegel umfasst, der bezüglich des gesendeten und zurückgestreuten Laserstrahls außerhalb der Achse angeordnet ist.

3. Vorrichtung zum dreidimensionalen Messen nach Anspruch 1 oder 2, **dadurch gekennzeichnet, dass** die zweiten Messmittel eine zwischen dem Lasersender (20) und der Teilerplatte (32) angeordnete prismenförmige Platte (24) zur Kompensierung der durch den sphärischen Spiegel (38) außerhalb der Achse erzeugten Verformungen der Wellenfläche des gesendeten Strahls umfassen.

4. Vorrichtung zum dreidimensionalen Messen nach Anspruch 3, deren zweite Messmittel außerdem Mittel (24, 28, 314) zum Messen des Zeitpunkts der Sendung des Laserstrahls und Mittel (48, 314) zum Messen des Zeitpunkts des Empfangs des von der Szene (4) zurückgestreuten Strahls durch den fotoempfindlichen Empfänger (46) umfassen, **dadurch gekennzeichnet, dass** die Mittel zum Messen des Zeitpunkts der Sendung des Laserstrahls eine optische Faser (28) umfassen, die einen Teil des durch die prismenförmige Platte (24) außerhalb der Achse reflektierten Laserstrahls empfängt und sie zu einem fotoempfindlichen Empfänger (29) überträgt.

5. Vorrichtung zum dreidimensionalen Messen nach einem der Ansprüche 1 bis 4, **dadurch gekennzeichnet, dass** das divergierende optische System (50) eine Divergenzlinse umfasst, die auf dem Weg des zurückgestreuten Strahls zwischen der Teilerplatte (32) und dem fotoempfindlichen Empfänger (46) angeordnet ist.

6. Vorrichtung zum dreidimensionalen Messen nach einem der Ansprüche 1 bis 5, **dadurch gekennzeichnet, dass** die Teilerplatte (32) ein halbreflektierendes Plättchen (34) zur Reduzierung der Dynamik der Energie des von der Szene (4) zurückgestreuten und von dem fotoempfindlichen Empfänger (46) empfangenen Laserstrahls umfasst.

7. Vorrichtung zum dreidimensionalen Messen nach einem der Ansprüche 1 bis 6, **dadurch gekennzeichnet, dass** der fotosensible Empfänger (46) eine Fotodiode umfasst und dass diese Lawinenfotodiode Mitteln (330) zum Temperaturausgleich zugeordnet ist.

8. Vorrichtung zum dreidimensionalen Messen nach Anspruch 7, **dadurch gekennzeichnet, dass** die Mittel (330) zum Temperaturausgleich eine Temperatursonde (316) umfassen und Mittel zur Regelung der Polarisierungsspannung des fotoempfindlichen Empfängers (46) in Abhängigkeit von der von dieser Sonde (316) gemessenen Temperatur sind.

9. Vorrichtung zum dreidimensionalen Messen nach einem der Ansprüche 1 bis 8, **dadurch gekennzeichnet, dass** die Abtastmittel (14, 42, 200, 202, 204, 206, 210, 212, 224, 226) einen Planspiegel (42) und Mittel (14, 200, 202, 206, 224, 226) zur Einstellung der Stellung dieses Spiegels um jede der ersten und der zweiten Drehachse (16, 44) der Abtastmittel umfassen.

10. Vorrichtung zum dreidimensionalen Messen nach 9, umfassend einen optomechanischen Teil (10) und einen elektronischen Teil (12), **dadurch gekennzeichnet, dass** die erste Drehachse (16) eine Seitendrehachse ist und dass die Mittel (14, 200, 202, 206) zur Regelung um diese Achse eine Plattform (14) umfassen, die um diese Achse durch einen Schrittmotor (200) in Drehung versetzt wird und mit einer axialen Öffnung (18) für den Durchgang von elektrischen Verbindungsmitteln (18a) zwischen Elementen des optomechanischen Teils (10) und Elementen des elektronischen Teils versehen ist.

11. Vorrichtung zum dreidimensionalen Messen nach Anspruch 10, **dadurch gekennzeichnet, dass** die Plattform (14) auf einem feststehenden Kranz (204) über Ringkugellagermittel (212) angeordnet ist, die zwischen der Plattform (14) und dem feststehenden Kranz (204) angeordnet sind.

12. Vorrichtung zum dreidimensionalen Messen nach Anspruch 11, **dadurch gekennzeichnet, dass** der Schrittmotor (200) unter dem feststehenden Kranz (204) an dessen Umfang angeordnet ist und einem Ritzel (206) zum Drehantrieb der Plattform (14) um die erste Achse (16) über einen von der Plattform (14) getragenen Zahnriemen (210) zugeordnet ist.

13. Vorrichtung zum dreidimensionalen Messen nach einem der Ansprüche 9 bis 12, **dadurch gekennzeichnet, dass** die zweite Drehachse (44) eine Höhendrehachse ist und dass die Mittel (224, 226) zur Regelung um diese Achse einen Übertragungsarm (224) umfassen; dessen Achse bezüglich der Plattform (14) fixiert ist und der den Spiegel (42) mit einem galvanometrischen Scanner (226) zum Drehantrieb des Spiegels (42) um die zweite Achse (44) verbindet.

14. Vorrichtung zum dreidimensionalen Messen nach einem der Ansprüche 10 bis 13, **dadurch gekennzeichnet, dass** die ersten Messmittel (214, 226) einen von der Plattform (14) getragenen ringförmigen optischen Inkrementalcodierer (214) zum Messen der Seitenrichtung des Strahls umfassen.

15. Vorrichtung zum dreidimensionalen Messen nach Anspruch 14, **dadurch gekennzeichnet, dass** der optische Codierer (214) mit dem feststehenden Kranz (204) fest verbunden ist und mit einem mit der Plattform (14) fest verbundenen beweglichen Teil (222) versehen ist.

16. Vorrichtung zum dreidimensionalen Messen nach einem der Ansprüche 1 bis 15, **dadurch gekennzeichnet, dass** sie außerdem eine Einheit (22) zur automatischen Fokussierung des von dem Lasersender (20) gesendeten Laserstrahls und Mittel (96, 98, 100, 108) zur Befestigung des Lasersenders (20) an der Einheit (22) umfasst.

17. Vorrichtung zum dreidimensionalen Messen nach Anspruch 16, **dadurch gekennzeichnet, dass** die Befestigungsmittel (96, 98, 100, 108) eine Grundplatte umfassen, die den Lasersender (20) trägt und an der Einheit (22) zur automatischen Fokussierung mit Hilfe von Schrauben (100) befestigt ist, die in in der Grundplatte (96) vorgesehene axiale Löcher (102) mit größerem Durchmesser eingeführt sind, sowie Schrauben (106) zur radialen Einstellung des Lasersenders (20) auf der automatischen Fokussierungseinheit (22).

18. Vorrichtung zum dreidimensionalen Messen nach einem der Ansprüche 16 und 17, **dadurch gekennzeichnet, dass** die Einheit (22) zur automatischen Fokussierung des Laserstrahls mindestens auf der Sendeachse (26) des Laserstrahls angeordnete Divergenzlinse (60, 62), eine ebenfalls auf der Sendeachse (26) angeordnete Konvergenzlinse (64) und Mittel (78, 118, 120, 122, 124, 126, 128, 130) zur Relativbewegung der Konvergenzlinse (64) und der Divergenzlinse (60, 62) längs der Sendeachse (26) umfasst.

19. Vorrichtung zum dreidimensionalen Messen nach Anspruch 18, **dadurch gekennzeichnet, dass** die Mittel (78, 118, 120, 122, 124, 126, 128, 130) zur Relativbewegung eine die Konvergenzlinse (64) tragende Buchse (78), um die herum eine biegsame Membran (120) befestigt ist, und Mittel (118, 124, 126, 128, 130) zur Betätigung der Membran (120) zum Zweck der Bewegung dieser Buchse (78) längs der Achse (26) umfassen.

20. Vorrichtung zum dreidimensionalen Messen nach Anspruch 19, **dadurch gekennzeichnet, dass** die Mittel (118, 124, 126, 128, 130) zur Betätigung der biegsamen Membran (120) einen Stromgenerator (124) und eine durch den Stromgenerator (124) mit Strom versorgte Spule (118) umfassen, die an der biegsamen Membran (120) befestigt ist und in dem Luftspalt eines Magnetkerns (112) um die Sendeachse (26) herum angeordnet ist.

21. Vorrichtung zum dreidimensionalen Messen nach Anspruch 19 oder 20, **dadurch gekennzeichnet, dass** die Mittel (118, 124, 126, 128, 130) zur Betätigung der biegsamen Membran (120) Mittel (126) zum Vergleich zwischen der erfassten Stellung der Konvergenzlinse (64) und der gewünschten Stellung der Konvergenzlinse (64) längs der Achse (26) umfassen, die Mittel zur Aktivierung des Stromgenerators (124) in Abhängigkeit von dieser Differenz umfassen.

22. Vorrichtung zum dreidimensionalen Messen nach einem der Ansprüche 16 bis 21, **dadurch gekennzeichnet, dass** die Einheit (22) zur automatischen Fokussierung optischer Mittel (128, 130) zur Erfassung der Stellung der Konvergenzlinse (64) auf der Sendeachse (26) umfasst.

23. Vorrichtung zum dreidimensionalen Messen nach einem der Ansprüche 9 bis 22, **dadurch gekennzeichnet, dass** sie Mittel (228) zur Einstellung der Mittel zur Stellungsregelung des galvanometrischen Spiegels (42) um die Höhendrehachse (44) und Mittel (229) zur Einstellung der Empfangsachse (36) des Laserstrahls um die Seitendrehachse (16) umfasst.

24. Vorrichtung zum dreidimensionalen Messen nach Anspruch 23, **dadurch gekennzeichnet, dass** die Mittel (228) zur Einstellung der Mittel zur Stellungsregelung des galvanometrischen Spiegels (42) und die Mittel (229) zur Einstellung der Empfangsachse (36) des Strahls jeweils eine Wiege (230, 234) umfassen, die von einem Kranzteil gebildet ist, und jeweils einen entsprechenden Wiegenhalter (232, 236) umfassen, in dem die Wiege bei Drehung um die Achse dieses Kranzes gleitet.

25. Vorrichtung zum dreidimensionalen Messen nach Anspruch 24, **dadurch gekennzeichnet, dass** die Drehachse der Wiege (230) der Mittel (228) zur Einstellung der Mittel zur Stellungsregelung des galvanometrischen spiegels zur Höhendrehachse (44) und zur Seitendrehachse (16) senkrecht ist und dass die Drehachse der Wiege (234) der Mittel (229) zur Einstellung der Empfangsachse (36) zur Höhendrehachse (44) senkrecht und in einer vertikalen Ebene ist, die die Seitenwinkeldrehachse (16) enthält, wobei diese Drehachsen der Wiegen (230, 234) sich im Mittelpunkt des Spiegels (42) schneiden.

26. Vorrichtung zum dreidimensionalen Messen nach einem der Ansprüche 1 bis 25, **dadurch gekennzeichnet, dass** sie außerdem Mittel (300) zur Reduzierung der Dynamik des am Austritt des fotoempfindlichen Empfängers (46) gelieferten Signals umfasst.

27. Vorrichtung zum dreidimensionalen Messen nach Anspruch 26, **dadurch gekennzeichnet, dass** die Mittel (300) zur Reduzierung der Dynamik des Signals einen Spannungsdämpfer (304) mit programmierbarem Gewinn und eine Verstärkungseinheit (308) mit feststehendem Gewinn am Austritt dieses Dämpfers (304) umfassen.

28. Vorrichtung zum dreidimensionalen Messen nach einem der Ansprüche 1 bis 27, **dadurch gekennzeichnet, dass** die Mittel (24, 28, 32, 34, 48, 314) zur Messung des Abstands zwischen der Vorrichtung und dem Spot eine integrierte Schaltung (314) zur Messung der "Flugzeit" des Laserstrahls umfassen.

29. Verfahren zur Bezeichnung einer Zone von Interesse auf einer Szene (4), das in einer Vorrichtung zum dreidimensionalen Messen nach einem der Ansprüche 1 bis 28 durchgeführt wird, umfassend die folgenden Schritte:
- die dreidimensionale Messung einer Menge von Punkten der Szene (4);
- die Speicherung (12) der Koordinaten der Menge von gemessenen Punkten;
- die Modellisierung und/oder Visualisierung dieser Menge von Punkten;
**dadurch gekennzeichnet, dass** es außerdem die folgenden Schritte umfasst:
- die Wahl einer Untermenge von mindestens einem Punkt dieser Menge, die die Zone von Interesse definiert; und
- die Steuerung der Abtastmittel (14, 42, 200, 202, 204, 206, 210, 212, 224, 226) und des Senders (20) so, dass der auf der Szene (4) durch den Laserstrahl erzeugte Spot (52) nacheinander mindestens einen Teil der Punkte der dieser Zone von Interesse entsprechenden gewählten Untermenge bezeichnet.
